# EUROPÄISCHE PATENTSCHRIFT

(11) **EP 3 921 519 B1**
(45) Veröffentlichungstag und Bekanntmachung des Hinweises auf die Patenterteilung: **11.01.2023**
(21) Anmeldenummer: 19812670.8
(22) Anmeldetag: 13.11.2019
(51) Int. Cl.: F01L 1/352, F01L 1/46

(54) **NOCKENWELLENVERSTELLSYSTEM UND VERFAHREN ZUM BETRIEB EINES NOCKENWELLENVERSTELLSYSTEMS**
CAMSHAFT PHASING SYSTEM AND CONTROL METHOD OF SUCH A SYSTEM
DISPOSITIF DE DEPHASAGE D'ARBRE À CAMES ET PROCÉDÉ DE COMMANDE D'UN TEL DISPOSITIF

(30) Priorität: 08.02.2019 DE 102019103104
(43) Veröffentlichungstag der Anmeldung: 15.12.2021
(73) Patentinhaber: Schaeffler Technologies AG & Co. KG, 91074 Herzogenaurach (DE)
(72) Erfinder: MANNWEILER, Marcel, 90427 Nürnberg (DE); AUCHTER, Jochen, 91466 Gerhardshofen (DE)
(86) Internationale Anmeldenummer: PCT/DE2019/100977
(87) Internationale Veröffentlichungsnummer: WO 2020/160714

(56) Entgegenhaltungen:
- EP-A1- 1 832 718
- EP-A2- 1 571 301
- WO-A1-2005/047658
- US-A1- 2007 157 897
- US-A1- 2007 261 651

## Beschreibung

Die Erfindung betrifft ein Nockenwellenverstellsystem, welches einen zur Verstellung einer Einlassnockenwelle vorgesehenen Nockenwellenversteller und einen zur Verstellung einer Auslassnockenwelle vorgesehenen Nockenwellenversteller umfasst. Ferner betrifft die Erfindung ein Verfahren zum Betrieb eines solchen Nockenwellenverstellsystems.

Ein Nockenwellenverstellsystem, mit welchem sowohl die Einlassnockenwelle eines Verbrennungsmotors als auch die Auslassnockenwelle des Verbrennungsmotors verstellt werden kann, ist zum Beispiel in der DE 10 2015 208 456 A1 beschrieben. Elektromechanische Nockenwellenversteller arbeiten beispielsweise mit einem Wellgetriebe als Stellgetriebe. Beispielhaft wird in diesem Zusammenhang auf die Dokumente EP 1832718 A1, DE 10 2016 221 802 A1, DE 10 2014 213 130 B4 und DE 10 2016 220 918 A1 hingewiesen.

Ein weiterer Nockenwellenversteller mit elektrischem Antrieb ist in der DE 103 52 361 A1 offenbart. Der elektrische Verstellmotor dieses Nockenwellenverstellers weist einen Permanentmagnet-Rotor auf, welcher bei Ausfall des Verstellmotors durch eine als Bremswicklung ausgebildete elektrische Bremse abgebremst werden kann, um eine Basisposition der Nockenwelle zu erreichen und zu halten.

Der Erfindung liegt die Aufgabe zugrunde, ein Nockenwellenverstellsystem zur Verstellung der Einlass- sowie Auslassnockenwelle eines Verbrennungsmotors gegenüber dem genannten Stand der Technik insbesondere unter energetischen Gesichtspunkten weiterzuentwickeln.

Diese Aufgabe wird erfindungsgemäß gelöst durch ein Nockenwellenverstellsystem mit den Merkmalen des Anspruchs 1. Ebenso wird die Aufgabe gelöst durch ein Verfahren zum Betrieb eines in einem Hubkolbenmotor eingebauten Nockenwellenverstellsystems gemäß Anspruch 7. Im Folgenden im Zusammenhang mit dem Betriebsverfahren erläuterte Ausgestaltungen und Vorteile der Erfindung gelten sinngemäß auch für die Vorrichtung, das heißt das Nockenwellenverstellsystem, und umgekehrt.

Das Nockenwellenverstellsystem umfasst einen ersten, zur Verstellung einer Einlassnockenwelle ausgebildeten elektromechanischen Nockenwellenversteller und einen zweiten, zur Verstellung einer Auslassnockenwelle ausgebildeten elektromechanischen Nockenwellenversteller, wobei mindestens einer der Nockenwellenversteller generatorisch betreibbar und mit einem Energiespeicher verknüpft ist, welcher zur Energieversorgung des anderen Nockenwellenverstellers vorgesehen ist.

Die Erfindung geht von der Überlegung aus, dass an der Einlassnockenwelle und an der Auslassnockenwelle eines Verbrennungsmotors unterschiedliche Belastungen auftreten, auf welche ein zur Verstellung der betreffenden Welle vorgesehener Versteller abzustimmen ist. Die Einlassnockenwelle ist in erster Linie durch das kinematische Moment und das Reibmoment des Ventiltriebs des Verbrennungsmotors, das heißt Hubkolbenmotors, belastet. Bei der Auslassnockenwelle treten zudem signifikante Belastungen durch Gaskräfte im Zylinder auf. Hinzu können Momente kommen, welche durch eine Hochdruckpumpe generiert werden.

Insgesamt liegt an der Einlassnockenwelle typischerweise nur ein geringes Drehmoment an, wogegen an der Auslassnockenwelle ein wesentlich größeres Drehmoment anliegt, welches zudem durch die Belastung des Verbrennungsmotors erheblich beeinflusst wird.

Weiter wird von der Überlegung ausgegangen, dass Dreiwellengetriebe, welche zur Verwendung als Stellgetriebe in einem elektromechanischen Nockenwellenversteller geeignet sind, grundsätzlich entweder als Positivgetriebe oder als Negativgetriebe konzipiert sein können.

In beiden Fällen fungiert ein mechanisch, typischerweise über einen Ketten- oder Riementrieb, angetriebenes Element, welches zugleich als Gehäuse oder Gehäuseteil des Stellgetriebes ausgebildet sein kann, als eingangsseitige Welle des Dreiwellengetriebes. Die ausgangsseitige Welle des Dreiwellengetriebes ist fest mit der zu verstellenden Welle, das heißt Nockenwelle, verbunden. Die dritte Welle des Dreiwellengetriebes ist im Fall eines elektromechanischen Nockenwellenverstellers elektrisch angetrieben. Rotiert diese dritte Welle mit derselben Drehzahl wie die eingangsseitige Welle, das heißt typischerweise das Ketten- oder Riemenrad, so dreht sich auch die ausgangsseitige Welle mit dieser Drehzahl. Dies gilt sowohl für Positivgetriebe als auch für Negativgetriebe. Eine Auslegung als Positivgetriebe bedeutet, dass eine Verstellung der elektrisch angetriebenen Welle in Relation zur eingangsseitigen Welle in einer ersten Richtung zu einer Verstellung der ausgangsseitigen Welle gegenüber der eingangsseitigen Welle in derselben Richtung führt. Dagegen wird bei einem Negativgetriebe eine Verstellung der elektrisch angetriebenen Welle gegenüber der eingangsseitigen Welle in einer ersten Richtung in eine entgegengesetzte Verstellung zwischen der ausgangsseitigen Welle oder eingangsseitigen Welle umgesetzt.

Bei einem Abbremsen der zu verstellenden Nockenwelle wird im Fall eines Negativgetriebes ein beschleunigendes Moment in die in anderen Betriebsphasen elektrisch angetriebene Welle, das heißt Motorwelle des Elektromotors, eingeleitet. Unter den "anderen Betriebsphasen" sind Betriebszustände zu verstehen, in denen die Nockenwelle aktiv, das heißt durch Bestromung des Elektromotors, verstellt wird.

Das beschleunigende Moment ist gemäß der Erfindung nutzbar, um die ansonsten elektrisch angetriebene Welle des Stellgetriebes des Nockenwellenverstellers als Eingangswelle des in diesem Fall generatorisch betriebenen Elektromotors des Nockenwellenverstellers zu verwenden.

Mindestens ein Elektromotor der beiden Nockenwellenversteller ist somit wahlweise als Motor oder als Generator nutzbar, wobei der letztgenannte Fall bedeutet, dass der Elektromotor als Bremse wirkt. Damit ist die Möglichkeit geschaffen, in einer ersten Betriebsphase des Nockenwellenverstellsystems den elektrischen Antrieb eines Nockenwellenverstellers generatorisch zu betreiben. Während dieser ersten Betriebsphase gewonnene Energie wird gespeichert. Die gespeicherte Energie wird in einer späteren Betriebsphase zur Betätigung des anderen Nockenwellenverstellers verwendet. Auch eine Überlappung der genannten Betriebsphasen kann gegeben sein.

In bevorzugter Ausgestaltung des Nockenwellenverstellsystems ist das Stellgetriebe des zur Betätigung der Einlassnockenwelle vorgesehenen Nockenwellenverstellers als Positivgetriebe ausgelegt. Bei demjenigen Stellgetriebe, welches dem zur Betätigung der Auslassnockenwelle vorgesehenen Nockenwellenversteller zuzurechnen ist, handelt es sich dagegen vorzugsweise um ein Negativgetriebe.

Beiden Nockenwellenverstellern ist in bevorzugter Ausgestaltung eine gemeinsame Leistungselektronikeinheit zugeordnet, welche im Fall eines Betriebs mit dreiphasiger Wechselspannung eine B6-Brücke zur Ansteuerung des jeweiligen Elektromotors umfasst. Der Energiespeicher ist in diesem Fall zwischen die beiden B6-Brücken geschaltet. Beispielsweise umfasst der Energiespeicher einen Kondensator. Ebenso ist eine elektrochemische Speicherung von Energie möglich.

Das Nockenwellenverstellsystem ermöglicht insbesondere die Speicherung von Energie, welche bei der Verstellung der Auslassnockenwelle gewonnen wird. Diese Energie kann zu einem späteren Zeitpunkt zur Verstellung der Einlassnockenwelle genutzt werden. Soweit ausreichend Energie gespeichert ist, kann diese auch zur Verstellung der auslassseitigen Nockenwelle eingesetzt werden.

Nachfolgend wird ein Ausführungsbeispiel der Erfindung anhand einer Zeichnung näher erläutert. Hierin zeigen:

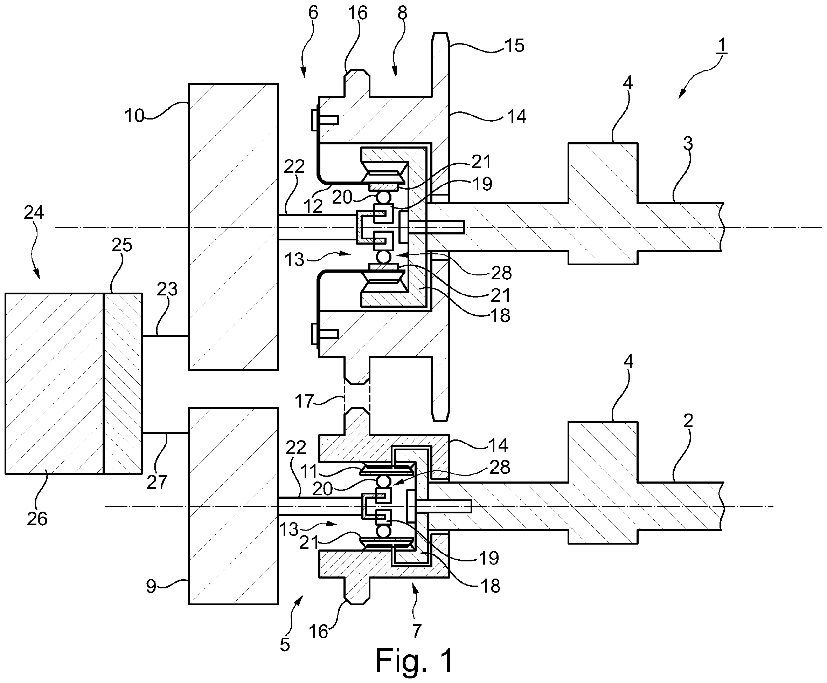

- Fig. 1: ein Nockenwellenverstellsystem in schematisierter Darstellung.

Ein insgesamt mit dem Bezugszeichen 1 gekennzeichnetes Nockenwellenverstellsystem ermöglicht die Verstellung einer Einlassnockenwelle 3 und einer Auslassnockenwelle 2 eines nicht weiter dargestellten Verbrennungsmotors eines Kraftfahrzeugs.

Nocken der Nockenwellen 2, 3 sind mit 4 bezeichnet. Zur Verstellung der Einlassnockenwelle 3 ist ein erster Nockenwellenversteller 6 vorgesehen. Ein zweiter Nockenwellenversteller 5 dient der Verstellung der Auslassnockenwelle 2. Bei beiden Nockenwellenverstellern 5, 6 handelt es sich um elektromechanische Nockenwellenversteller.

Beide Nockenwellenversteller 5, 6 sind in an sich bekannter Grundkonzeption aufgebaut aus einem Stellgetriebe 7, 8 und einem zu dessen Betätigung vorgesehenen Elektromotor 9, 10. Bei dem Stellgetriebe 7, 8 handelt es sich in beiden Fällen um ein Dreiwellengetriebe in Form eines Wellgetriebes. Hierbei ist das Stellgetriebe 8 des ersten, das heißt einlassseitigen, Nockenwellenverstellers 6 als Positivgetriebe konzipiert. Das Stellgetriebe 7 des zweiten Nockenwellenverstellers 5 ist dagegen als Negativgetriebe aufgebaut.

Prinzipbedingt arbeitet jedes Stellgetriebe 7, 8 mit einem elastischen Getriebeelement 11, 12. Im skizzierten Ausführungsbeispiel handelt es sich beim elastischen Getriebeelement 11 des Stellgetriebes 7 um einen Flexring. Das elastische Getriebeelement 12 des Stellgetriebes 8 ist dagegen als Kragenhülse ausgebildet. In beiden Fällen ist zur Verformung des elastischen Getriebeelementes 11, 12 ein Wellgenerator 13 vorgesehen. Der Wellgenerator 13 ist in ein als Gehäuse ausgebildetes Antriebselement 14 des Stellgetriebes 7, 8 eingesetzt. Die Antriebselemente 14 sind mechanisch angetrieben und stellen jeweils eine erste Welle des betreffenden Stellgetriebes 7, 8 dar.

Im Ausführungsbeispiel weist das Stellgetriebe 8 ein erstes Kettenrad 15 als Bestandteil des Antriebselementes 14 auf. Das erste Kettenrad 15 wird in an sich bekannter Weise über die Kurbelwelle des Verbrennungsmotors angetrieben, wobei es mit halber Kurbelwellendrehzahl rotiert. Über ein am selben Antriebselement 14 vorhandenes zweites Kettenrad 16 wird auch das Antriebselement 14 des Stellgetriebes 7 mechanisch angetrieben. Zu diesem Zweck weist auch das Antriebselement 14 des Getriebes 7 ein Kettenrad 16 auf. Eine die Getriebe 7, 8 mechanisch miteinander koppelnde Kette ist mit 17 bezeichnet und lediglich gestrichelt angedeutet.

Das elastische Getriebeelement 11, 12 eines jeden Stellgetriebes 7, 8 wirkt direkt zusammen mit einem Abtriebselement 18, welches in beiden Fällen als Hohlrad gestaltet und fest mit der zu verstellenden Nockenwelle 2, 3 verbunden ist. Das Abtriebselement 18, das heißt Abtriebshohlrad, stellt die zweite Welle des Stellgetriebes 7, 8 dar.

Als dritte Welle fungiert in beiden Fällen ein Innenring 19 eines Wälzlagers 28, welches dem Wellgenerator 13 zuzurechnen ist. Der Innenring 19 weist eine elliptische, nicht kreisrunde Außenumfangsfläche auf, auf welcher Kugeln 20 als Wälzkörper abrollen. Der zugehörige Außenring des Wälzlagers 28 ist mit 21 bezeichnet. Im Unterschied zum Innenring 19 ist der Außenring 21 elastisch nachgiebig, so dass er sich permanent der unrunden Form des Innenrings 19 anpasst. Der Außenring 21 ist direkt umgeben von dem außenverzahnten elastischen Getriebeelement 11, 12.

Im Fall des zweiten, das heißt auslassseitigen, Nockenwellenverstellers 5 greift die Außenverzahnung des elastischen Getriebeelementes 11 sowohl in eine Innenverzahnung des Antriebselementes 14 als auch in eine Innenverzahnung des Abtriebselementes 18 ein. Hierbei stimmt die Anzahl der Zähne der Außenverzahnung des elastischen Getriebeelementes 11, das heißt Flexrings, mit der Anzahl der Zähne der Innenverzahnung des Abtriebselementes 18 überein. Der Flexring 11 bildet damit zusammen mit dem Abtriebselement 18 eine Kupplungsstufe des Stellgetriebes 7. Die Anzahl der Zähne der Innenverzahnung des Antriebselementes 14 ist dagegen geringfügig, nämlich um zwei, größer als die Anzahl der Zähne der Außenverzahnung des Flexrings 11. Dies bedeutet, dass zwischen dem Flexring 11 und dem Antriebselement 14 des Stellgetriebes 7 die Übersetzungsstufe dieses Stellgetriebes 7 gebildet ist. Wird der Innenring 19 gegenüber dem Antriebselement 14 des Stellgetriebes 7 in einer bestimmten Richtung verdreht, so verdreht sich - um einen vielfach geringeren Winkel -das Abtriebselement 18 des Stellgetriebes 7 in der entgegengesetzten Richtung gegenüber dem Antriebselement 14. Das heißt, dass das Stellgetriebe 7 als Negativgetriebe ausgelegt ist. Ein Abbremsen der Auslassnockenwelle 2 wird dementsprechend eine Beschleunigung des Innenrings 19 umgesetzt.

Beim Stellgetriebe 8, welches sich auf der Einlassseite befindet, wirkt die Außenverzahnung des elastischen Getriebeelementes 12, welches in diesem Fall als Kragenhülse ausgebildet ist, dagegen ausschließlich mit der Innenverzahnung des Abtriebselementes 18 zusammen. In diesem Fall ist die Anzahl der Zähne des elastischen Getriebeelementes 12 um die Zahl zwei geringer als die Anzahl der Zähne der Innenverzahnung des Abtriebselementes 18. Dies führt dazu, dass eine Verdrehung des Innenrings 19 gegenüber dem Antriebselement 14 in einer ersten Stellrichtung in eine hierzu gleichsinnige Verschwenkung zwischen der Einlassnockenwelle 3 und dem Antriebselement 14 umgesetzt wird. Das heißt, das Stellgetriebe 8 ist als Positivgetriebe ausgelegt.

Der Innenring 19 eines jeden Wellgenerators ist drehfest mit einer Elektromotorwelle 22 gekoppelt. Im Fall des auslassseitigen Nockenwellenverstellers 5 wird das über das Stellgetriebe 7 beim Bremsen der Auslassnockenwelle 2 in die Elektromotorwelle 22 eingeleitete Drehmoment genutzt, um den Elektromotor 9 des Nockenwellenverstellers 5 generatorisch zu betreiben. Der Elektromotor 9 ist zu diesem Zweck über eine Leitung 27 an eine insgesamt mit 24 bezeichnete Ansteuervorrichtung angeschlossen. Die Ansteuervorrichtung 24 umfasst eine Leistungselektronikeinheit 25 und einen Energiespeicher 26. Der Energiespeicher 26 umfasst im Ausführungsbeispiel einen Superkondensator. Ein solcher Kondensator zeichnet sich durch die Möglichkeit einer sehr schnellen Energieaufnahme und Energieabgabe aus.

Im vorliegenden Fall wird aus dem Energiespeicher 26 ausgeleitete Energie genutzt, um den ersten elektromechanischen Nockenwellenversteller 6, welcher über eine Leitung 23 an die Ansteuervorrichtung 24 angeschlossen ist, mit elektrischer Energie zu versorgen. Die Leistungselektronikeinheit 25 umfasst in nicht dargestellter Weise zwei B6-Brücken, welche jeweils mit sechs MOSFETs arbeiten und einen Elektromotor 9, 10 ansteuern. Der Energiespeicher 26 ist zwischen die beiden B6-Brücken geschaltet. Optional ist der Energiespeicher 26 durch einen elektrochemischen Speicher, das heißt Akkumulator, ergänzt.

### Bezuqszeichenliste

- 1: Nockenwellenverstellsystem
- 2: Auslassnockenwelle
- 3: Einlassnockenwelle
- 4: Nocken
- 5: Nockenwellenversteller der Auslassnockenwelle
- 6: Nockenwellenversteller der Einlassnockenwelle
- 7: Stellgetriebe als Negativgetriebe
- 8: Stellgetriebe als Positivgetriebe
- 9: Elektromotor
- 10: Elektromotor
- 11: elastisches Getriebeelement, Flexring
- 12: elastisches Getriebeelement, Kragenhülse
- 13: Wellgenerator
- 14: Antriebselement
- 15: Kettenrad
- 16: Kettenrad
- 17: Kette
- 18: Abtriebselement
- 19: Innenring
- 20: Wälzkörper, Kugel
- 21: Außenring
- 22: Elektromotorwelle
- 23: Leitung
- 24: Ansteuervorrichtung
- 25: Leistungselektronikeinheit
- 26: Energiespeicher
- 27: Leitung
- 28: Wälzlager

## Patentansprüche

1. Nockenwellenverstellsystem (1), umfassend einen ersten, zur Verstellung einer Einlassnockenwelle (3) ausgebildeten elektromechanischen Nockenwellenversteller (6) und einen zweiten, zur Verstellung einer Auslassnockenwelle (2) ausgebildeten elektromechanischen Nockenwellenversteller (5), **dadurch gekennzeichnet dass** mindestens einer der Nockenwellenversteller (5,6) generatorisch betreibbar und mit einem Energiespeicher (26) zur Energieversorgung des anderen Nockenwellenverstellers (6,5) verknüpft ist.

2. Nockenwellenverstellsystem (1) nach Anspruch 1, **dadurch gekennzeichnet, dass** jeder Nockenwellenversteller (5,6) ein Dreiwellengetriebe als Stellgetriebe (7,8) und einen zu dessen Betätigung vorgesehenen Elektromotor (9,10) umfasst.

3. Nockenwellenverstellsystem (1) nach Anspruch 2, **dadurch gekennzeichnet, dass** als Dreiwellengetriebe (7,8) ein Wellgetriebe vorgesehen ist.

4. Nockenwellenverstellsystem (1) nach Anspruch 2 oder 3, **dadurch gekennzeichnet, dass** das Stellgetriebe (8) des zur Betätigung der Einlassnockenwelle (3) vorgesehenen Nockenwellenverstellers (6) als Positivgetriebe ausgelegt ist.

5. Nockenwellenverstellsystem (1) nach Anspruch 4, **dadurch gekennzeichnet, dass** das Stellgetriebe (7) des zur Betätigung der Auslassnockenwelle (2) vorgesehenen Nockenwellenverstellers (5) als Negativgetriebe ausgelegt ist.

6. Nockenwellenverstellsystem (1) nach einem der Ansprüche 1 bis 5, **dadurch gekennzeichnet, dass** der Energiespeicher (26) einen Kondensator umfasst.

7. Verfahren zum Betrieb eines in einem Hubkolbenmotor eingebauten Nockenwellenverstellsystems (1), welches zwei jeweils einen elektrischen Antrieb (9,10) aufweisende Nockenwellenversteller (5,6), nämlich einen ersten, zur Verstellung einer Einlassnockenwelle (3) des Hubkolbenmotors vorgesehenen Nockenwellenversteller (6) und einen zweiten, zur Verstellung einer Auslassnockenwelle (2) des Hubkolbenmotors vorgesehenen Nockenwellenversteller (5) umfasst, wobei in einer ersten Betriebsphase der elektrische Antrieb (9,10) eines Nockenwellenverstellers (5,6) generatorisch betrieben wird, während der ersten Betriebsphase gewonnene Energie gespeichert und in einer späteren Betriebsphase zur Betätigung des anderen Nockenwellenverstellers (6,5) eingesetzt wird.

8. Verfahren nach Anspruch 7, **dadurch gekennzeichnet, dass** bei der Verstellung der Auslassnockenwelle (2) gewonnene Energie gespeichert und zur Verstellung der Einlassnockenwelle (3) genutzt wird.

## Claims

1. A camshaft adjusting system (1), comprising a first electromechanical camshaft adjuster (6) which is configured for the adjustment of an inlet camshaft (3) and a second electromechanical camshaft adjuster (5) which is configured for the adjustment of an outlet camshaft (2), **characterized in that** at least one of the camshaft adjusters (5, 6) can be operated as a generator and is linked to an energy store (26) for the supply of energy to the other camshaft adjuster (6, 5).

2. The camshaft adjusting system (1) according to claim 1, **characterized in that** each camshaft adjuster (5, 6) comprises a three-shaft gear as an actuating gear (7, 8) and an electric motor (9, 10) provided for its actuation.

3. The camshaft adjusting system (1) according to claim 2, **characterized in that** a harmonic gear is provided as a three-shaft gear (7, 8).

4. The camshaft adjusting system (1) according to claim 2 or 3, **characterized in that** the actuating gear (8) of the camshaft adjuster (6) provided for actuating the inlet camshaft (3) is designed as a positive gear.

5. The camshaft adjusting system (1) according to claim 4, **characterized in that** the actuating gear (7) of the camshaft adjuster (5) provided for actuating the outlet camshaft (2) is designed as a negative gear.

6. The camshaft adjusting system (1) according to one of claims 1 to 5, **characterized in that** the energy store (26) comprises a capacitor.

7. A method for operating camshaft adjusting system (1) installed in a reciprocating piston engine, which comprises two camshaft adjusters (5, 6) each having an electric drive (9, 10), namely a first camshaft adjuster (6) provided for the adjustment of an inlet camshaft (3) of the reciprocating piston engine and a second camshaft phaser (5) provided for the adjustment of an outlet camshaft (2) of the reciprocating piston engine, wherein in a first operating phase the electric drive (9, 10) of a camshaft adjuster (5, 6) is operated as a generator, and energy obtained during the first operating phase is stored and used in a later operating phase for actuating the other camshaft adjuster (6, 5).

8. The method according to claim 7, **characterized in that** energy gained during the adjustment of the outlet camshaft (2) is stored and used for adjusting the inlet camshaft (3).

## Revendications

1. Système déphaseur d'arbre à cames (1), comprenant un premier déphaseur d'arbre à cames (6) électromécanique conçu pour régler un arbre à cames d'admission (3) et un second déphaseur d'arbre à cames (5) électromagnétique conçu pour régler un arbre à cames d'échappement (2), **caractérisé en ce qu'**au moins un des déphaseurs d'arbre à cames (5, 6) peut fonctionner comme un générateur et est relié à un accumulateur d'énergie (26) pour alimenter en énergie l'autre déphaseur d'arbre à cames (6, 5).

2. Système déphaseur d'arbre à cames (1) selon la revendication 1, **caractérisé en ce que** chaque déphaseur d'arbre à cames (5, 6) comprend une transmission à trois arbres en tant que transmission de réglage (7, 8) et un moteur électrique (9, 10) sert à son actionnement.

3. Système déphaseur d'arbre à cames (1) selon la revendication 2, **caractérisé en ce qu'**un réducteur à planétaire sert de transmission à trois arbres (7, 8).

4. Système déphaseur d'arbre à cames (1) selon la revendication 2 ou 3, **caractérisé en ce que** la transmission de réglage (8) du déphaseur d'arbre à cames (6) servant à l'actionnement de l'arbre à cames d'admission (3) est conçue comme transmission positive.

5. Système déphaseur d'arbre à cames (1) selon la revendication 4, **caractérisé en ce que** la transmission de réglage (7) du déphaseur d'arbre à cames (5) servant à l'actionnement de l'arbre à cames d'échappement (2) est conçue comme transmission négative.

6. Système déphaseur d'arbre à cames (1) selon l'une quelconque des revendications 1 à 5, **caractérisé en ce que** l'accumulateur d'énergie (26) comprend un condensateur.

7. Procédé de commande d'un système déphaseur d'arbre à cames (1) intégré dans un moteur à pistons, qui comprend deux déphaseurs d'arbre à cames (5, 6) présentant respectivement un entraînement électrique (9, 10), à savoir un premier déphaseur d'arbre à cames (6) servant à régler un arbre à cames d'admission (3) du moteur à pistons et un second déphaseur d'arbre à cames (5) servant à régler un arbre à cames d'échappement (2) du moteur à pistons, dans lequel, dans une première phase de commande l'entraînement électrique (9, 10) d'un déphaseur d'arbre à cames (5, 6) fonctionne comme un générateur, pendant la première phase de commande l'énergie récupérée est accumulée et est utilisée, dans une phase de commande ultérieure, pour l'actionnement de l'autre déphaseur d'arbre à cames (6, 5).

8. Procédé selon la revendication 7, **caractérisé en ce que** lors du réglage de l'arbre à cames d'échappement (2) l'énergie récupérée est accumulée et utilisée pour régler l'arbre à cames d'admission (3).
